# EUROPÄISCHE PATENTANMELDUNG

(11) **EP 4 306 313 A1**
(43) Veröffentlichungstag der Anmeldung: **17.01.2024**
(21) Anmeldenummer: 23182323.8
(22) Anmeldetag: 29.06.2023
(51) Int. Cl.: B32B 21/02, B32B 7/02, B32B 7/12, B32B 21/13, B32B 21/14

(54) **HOLZVERBUNDELEMENT UND VERFAHREN ZU DESSEN HERSTELLUNG**

(30) Priorität: 13.07.2022 AT 505192022
(71) Anmelder: Gollner, Fabian, 9462 Bad St. Leonhard (AT)
(72) Erfinder: Gollner, Fabian, 9462 Bad St. Leonhard (AT)
(74) Vertreter: Wirnsberger & Lerchbaum Patentanwälte OG

(57) **Zusammenfassung**

Die Erfindung betrifft Holzverbundelement (1), gebildet mit mehreren aufeinander angeordneten Lagen, wobei eine Zwischenlage (4) zwischen einer ersten Decklage (2) und einer zweiten Decklage (3) angeordnet ist. Zur Optimierung einer Biegefestigkeit ist erfindungsgemäß vorgesehen, dass die erste Decklage (2) und die zweite Decklage (3) jeweils mit einer Furnierschicht (5) gebildet ist und die Zwischenlage (4) mit Grobspanmaterial (6) gebildet ist.

Weiter betrifft die Erfindung ein Verfahren zur Herstellung eines Holzverbundelementes (1).

## Beschreibung

Die Erfindung betrifft ein Holzverbundelement, welches mit mehreren aufeinander angeordneten Lagen gebildet ist, wobei eine Zwischenlage zwischen einer ersten Decklage und einer zweiten Decklage angeordnet ist.

Außerdem betrifft die Erfindung ein Verfahren zur Herstellung eines Holzverbundelementes, welches Holzverbundelement mit mehreren aufeinander angeordneten Lagen gebildet wird, wobei eine Zwischenlage zwischen einer ersten Decklage und einer zweiten Decklage angeordnet wird.

Aus dem Stand der Technik sind Grobspanplatten, auch als OSB-Platten (oriented strand board) bezeichnet, bekannt. Grobspanplatten sind in der Regel mit langen, schlanken Spänen, auch als Strands bezeichnet, gebildet, wobei die Späne miteinander verklebt und verpresst sind. Üblicherweise weisen Grobspanplatten durch deren ausgedehntere Spänenform eine höhere Biegefestigkeit als Flachpressplatten, welche häufig im Möbelbau eingesetzt werden, auf.

Hier setzt die Erfindung an. Aufgabe der Erfindung ist es, ein Holzverbundelement der eingangs genannten Art anzugeben, welches eine optimierte Biegefestigkeit aufweist.

Ein weiteres Ziel der Erfindung ist es, ein Verfahren der eingangs genannten Art anzugeben, mit welchem ein Holzverbundelement mit optimierter Biegefestigkeit herstellbar ist.

Die Aufgabe wird erfindungsgemäß dadurch gelöst, dass bei einem Holzverbundelement der eingangs genannten Art die erste Decklage und die zweite Decklage jeweils mit zumindest einer Furnierschicht gebildet ist und die Zwischenlage mit Grobspanmaterial gebildet ist.

Grundlage der Erfindung ist die Idee, ein Rissbildungspotenzial in einem Grenzflächenbereich von mit Grobspanmaterial gebildeten Platten bzw. Lagen zu verringern. Dies sollte vorzugsweise mit möglichst wenig Aufwand, insbesondere Kostenaufwand, umgesetzt werden.

Es hat sich gezeigt, dass dies erreicht werden kann, wenn das Holzverbundelement eine erste Decklage, eine zweite Decklage und eine Zwischenlage aufweist. Zweckmäßig kann das Grobspanmaterial zwischen der ersten Decklage und der zweiten Decklage, welche jeweils mit einer Furnierschicht gebildet ist, angeordnet sein. Das Grobspanmaterial ist dabei als Teil einer bzw. als Zwischenlage umgesetzt. Die erste Decklage bzw. zweite Decklage kann dabei mit, insbesondere aus, einer einzelnen oder mit, insbesondere aus, mehreren Furnierschichten gebildet sein. Im Besonderen kann es ausreichend sein, wenn die erste Decklage und/oder zweite Decklage mit, insbesondere aus, einer einzelnen Furnierschicht gebildet ist. Auf diese Weise kann eine hohe Biegefestigkeit erreicht werden.

Die erste Decklage, die zweite Decklage und die Zwischenlage sind üblicherweise entlang einer Stapelrichtung aufeinander angeordnet. Die Stapelrichtung ist in der Regel winklig, insbesondere orthogonal zu einer Längsrichtung und Breitenrichtung der jeweiligen Lage bzw. des Holzverbundelementes, insbesondere der Zwischenlage, ausgerichtet. Die Stapelrichtung stimmt dabei meist im Wesentlichen mit einer Höhenrichtung der jeweiligen Lage bzw. des Verbundelementes, insbesondere der Zwischenlage, überein. Eine Höhe der jeweiligen Lage ist in der Regel kleiner als eine Breite und als eine Länge der jeweiligen Lage. Üblicherweise sind die Lagen an einer Hauptfläche der jeweiligen Lagen aufeinandergestapelt, wobei die Hauptfläche parallel zur Längsrichtung und Breitenrichtung der jeweiligen Lage verläuft. Die Längsrichtung und Breitenrichtung der jeweiligen Lage sind in der Regel orthogonal zueinander und die Höhenrichtung der jeweiligen Lage orthogonal zu diesen ausgerichtet. Die erste Decklage, zweite Decklage und/oder die Zwischenlage sind üblicherweise plattenförmig ausgebildet.

Für eine besondere hohe Festigkeit, kann die erste Decklage und/oder zweite Decklage mit, insbesondere aus, mehreren, vorzugsweise miteinander verklebten, Furnierschichten gebildet sein. Die Furnierschichten sind üblicherweise, insbesondere entlang der Stapelrichtung, aufeinander angeordnet. Dabei können die Furnierschichten der jeweiligen Lage im Wesentlichen parallel zueinander ausgerichtete Holzfaserverläufe oder winklig zueinander ausgerichtete Holzfaserlängsrichtungen aufweisen. Günstig ist es, wenn Faserlängsrichtungen von unmittelbar aufeinander folgenden Furnierschichten einen Winkel von mehr als 45°, bevorzugt etwa 90°, aufweisen. Zweckmäßig können die mehreren Furnierschichten in Form von Furnierschichtholz oder Furniersperrholz angeordnet sein bzw. ein solches bilden. Die erste Decklage und zweite Decklage können gleich oder unterschiedlich, insbesondere auf eine vorgenannte Weise, ausgebildet sein. Beispielsweise kann eine der Decklagen, mit bzw. aus Furnierschichtholz und die andere Decklage mit bzw. aus Furniersperrholz gebildet sein. Die Furnierschichten können aus Fichtenholz oder Buchenholz gebildet sein. Die Furnierschichten der ersten Decklage können aus einer anderen Holzart gebildet sein als die Furnierschichten der zweiten Decklage. Beispielsweise können die Furnierschichten der erste Decklage aus Buchenholz und die Furnierschichten der zweiten Decklage aus Fichtenholz gebildet sein, oder in umgekehrter Weise.

Vorteilhaft ist es, wenn das Grobspanmaterial der Zwischenlage mit, insbesondere aus, miteinander verklebten und/oder verpressten Spänen gebildet ist. Die Späne werden auch als Strands bezeichnet. Die Späne sind üblicherweise aus Holz, insbesondere Fichtenholz oder Buchenholz, gebildet. Ein Verkleben der Späne erfolgt üblicherweise durch Aufbringen von Klebstoff, insbesondere Leim, auf die Späne. Als Klebstoff hat sich insbesondere PMDI (Polymeres Diphenylmethandiisocyanat) bewährt. Im Rahmen eines Herstellungsprozesses, in der Regel bevor die Späne zwischen den Decklagen angeordnet werden, kann der Klebstoff mit einer Sprühvorrichtung auf die Späne gesprüht werden. Dies erfolgt häufig unter einer Druckgasbeaufschlagung, beispielsweise einer Druckluftbeaufschlagung, des Klebstoffes, beispielsweise mit einer Pressluft-Sprühvorrichtung. Praktikabel kann dies mit einer Beleimmaschine umgesetzt werden, in welcher die Späne unter Umwälzung der Späne mit dem Klebstoff beaufschlagt, insbesondere besprüht, werden. Die Beleimmaschine weist in der Regel eine Trommel zur Aufnahme der Späne auf, wobei die Späne unter Rotation der Trommel umgewälzt und mit dem Klebestoff beaufschlagt bzw. besprüht werden.

Bewährt hat es sich, wenn eine Beaufschlagung der Späne mit dem Klebstoff mit einem Beleimungsgrad von 5 % bis 15 %, insbesondere etwa 10 %, erfolgt. Beleimungsgrad bezeichnet üblicherweise einen Anteil von Klebstoffmasse zu trockener Spänenmasse, insbesondere Atro-Strandmasse.

Für eine hohe Biegefestigkeit hat es sich bewährt, wenn das Grobspanmaterial der Zwischenlage eine mittlere Rohdichte von 550 kg/m³ bis 800 kg/m³, insbesondere 600 kg/m³ bis 700 kg/m³, bevorzugt etwa 620 kg/m³, aufweist. Üblicherweise bezeichnet die mittlere Rohdichte die Dichte eines porösen Festkörpers basierend auf einem Volumen einschließlich von Porenräumen.

Üblicherweise weisen die Späne des Grobspanmaterials eine durchschnittliche Länge von 100 mm bis 200 mm und/oder eine durchschnittliche Breite von 10 mm bis 50 mm und/oder eine durchschnittliche Dicke von 0,6 mm bis 1,5 mm auf. Die durchschnittliche Länge kann insbesondere 100 mm bis 150 mm betragen. Die durchschnittliche Breite kann insbesondere 10 mm bis 15 mm betragen. Die durchschnittliche Dicke kann insbesondere 0,6 mm bis 0,8 mm betragen.

In einer praktikablen Umsetzung kann die Zwischenlage bzw. das Grobspanmaterial mit, insbesondere aus, einer Grobspanplatte, insbesondere einer OSB-Platte (oriented strand board), gebildet sein. Die OSB-Platte kann gemäß Norm EN 300, insbesondere als OSB/1-Platte, OSB/2-Platte, OSB/3-Platte oder OSB/4-Platte, ausgebildet sein.

Eine praktikable Umsetzung ist erreichbar, wenn die Späne der Zwischenlage ohne Vorzugsrichtung in der Zwischenlage angeordnet sind. Die Späne können dann im Wesentlichen eine unregelmäßige bzw. isotrope Ausrichtung deren Längsrichtung aufweisen. Günstig für eine hohe Biegefestigkeit ist es, wenn die Späne bzw. deren Längsrichtungen eine Vorzugsrichtung parallel zur einer durch die Längsrichtung und Breitenrichtung der Zwischenlage definierte Ausrichtungsebene aufweisen. Hierzu kann eine Mehrheit der Späne Längsrichtungen parallel zur Ausrichtungsebene aufweisen. Insbesondere gilt dies für mehr als 75 %, bevorzugt mehr als 85 %, insbesondere bevorzugt mehr als 90 %, der Späne der Zwischenlage. Im Besonderen kann die Längsrichtung der Späne dabei, insbesondere gemäß vorgenannten Anteilen, im Wesentlichen parallel zur Längsrichtung und/oder Breitenrichtung der Zwischenlage ausgerichtet sein. Zweckmäßig können die Späne im Rahmen eines Herstellungsprozesses, beispielsweise durch Streuen der Späne, üblicherweise mit einer Streumaschine, ausgerichtet werden.

Ein robuster Aufbau ist erreichbar, wenn die Zwischenlage zwei Randschichten und eine zwischen den Randschichten angeordnete Mittelschicht aufweist, wobei die Längsrichtungen der Späne in den Randschichten eine Vorzugsrichtung aufweisen und die Längsrichtungen der Späne in der Mittelschicht im Wesentlichen eine unregelmäßige bzw. isotrope Ausrichtung aufweisen. Insbesondere können die Längsrichtungen der Späne in den Randschichten wie vorgenannt ausgeführt ausgerichtet sein. Die Längsrichtungen der Späne in den beiden Randschichten können sich zwischen den beiden Randschichten unterscheiden oder auf gleiche Weise ausgerichtet sein. Die Randschichten und die Mittelschicht sind üblicherweise im Wesentlichen orthogonal zur Stapelrichtung angeordnet. Zweckmäßig ist es, wenn die Randschichten jeweils eine Dicke aufweisen, welche kleiner ist als eine Dicke der Mittelschicht. Die Dicke wird in der Regel in Höhenrichtung der Schicht, insbesondere parallel zur Stapelrichtung, gemessen. Praktikabel ist es, wenn die Dicke der Mittelschicht mehr als 50 %, insbesondere mehr als 75 %, bevorzugt mehr als 90 %, einer Höhe der Zwischenlage ist. Die Randschichten und/oder die Mittelschicht sind in der Regel plattenförmig ausgebildet.

Die erste Decklage bzw. zweite Decklage, insbesondere deren jeweilige Furnierschicht, sind üblicherweise mittels Klebstoff, insbesondere Leim, mit der Zwischenlage verklebt. Der Klebstoff kann PMDI (Polymeres Diphenylmethandiisocyanat) sein. Üblicherweise sind die erste Decklage und/oder die zweite Decklage bzw. deren Furnierschicht jeweils unmittelbar mit der Zwischenlage verbunden, insbesondere mit dieser verklebt.

Bewährt hat es sich, wenn die Furnierschichten der ersten Decklage bzw. zweiten Decklage eine Dicke zwischen 0,5 mm und 8 mm, insbesondere zwischen 1 mm und 3 mm, aufweisen. Die Furnierschichten der ersten Decklage können eine andere Dicke als die Furnierschichten der zweiten Decklage aufweisen.

Zweckmäßig kann das Holzverbundelement als Wandelement, beispielsweise Wandpaneel, bei einem Gebäude vorgesehen sein. Es hat sich gezeigt, dass bei dem Holzverbundelement eine ausgeprägter Feuchtigkeitssperrwirkung erreichbar ist. Praktikabel ist es, wenn ein Verputz unmittelbar auf das Holzverbundelement aufgebracht wird bzw. das Holzverbundelement einen Verputz aufweist, welcher unmittelbar auf eine der Decklagen, insbesondere deren Furnierschicht, aufgebracht ist.

Das weitere Ziel wird dadurch gelöst, dass bei einem Verfahren zur Herstellung eines Holzverbundelementes der eingangs genannten Art die erste Decklage und die zweite Decklage jeweils mit, insbesondere aus, einer Furnierschicht gebildet wird und die Zwischenlage mit, insbesondere aus, Grobspanmaterial gebildet wird. Wie vorstehend ausgeführt kann dadurch eine optimierte Biegefestigkeit umgesetzt werden. Mit dem Verfahren kann ein in diesem Dokument, insbesondere vorstehend, beschriebenes Holzverbundelement hergestellt werden.

Es versteht sich, dass das Verfahren zur Herstellung eines Verbundelementes entsprechend bzw. analog den Merkmalen und Wirkungen, welche im Rahmen eines Holzverbundelementes, insbesondere vorstehend, beschrieben sind, ausgebildet sein kann. Analoges gilt auch für das Holzverbundelement im Hinblick auf das Verfahren.

Für die Herstellung des Holzverbundelementes sind üblicherweise Späne des Grobspanmaterials zur Verfügung gestellt. Die Späne sind üblicherweise aus Holz, insbesondere Fichtenholz oder Buchenholz, gebildet. Die Späne können eine Holzfeuchtigkeit von 5 % bis 15 %, insbesondere etwa 10 %, aufweisen.

Üblicherweise werden die Späne des Grobspanmaterials mit Klebstoff beaufschlagt, bevor das Grobspanmaterial zwischen der ersten Decklage und zweiten Decklage angeordnet wird. Dies kann erfolgen, indem Klebstoff mit einer Sprühvorrichtung, insbesondere unter Druckgasbeaufschlagung, auf die Späne gesprüht wird. Vorteilhaft ist es, wenn die Späne während und/oder nach der Beaufschlagung mit dem Klebstoff umgewälzt werden. Dadurch kann der Klebstoff auf den Spänen, vorzugsweise gleichmäßig, verteilt werden. Eine Umwälzung und/oder Beaufschlagung mit Klebstoff der Späne kann mit einer Beleimmaschine erfolgen. Hierzu werden die Späne üblicherweise in einer Trommel der Beleimmaschine, häufig durch Rotation der Trommel, umgewälzt und/oder mit Klebstoff beaufschlagt, insbesondere besprüht.

Mit Vorteil ist vorgesehen, dass das Grobspanmaterial gepresst wird, vorzugsweise bei einer Temperatur von mindestens 150 °C. Dadurch ist ein besonders fester Verbund zwischen den Spänen erreichbar. Hierzu werden die Späne, vorzugsweise nach Beaufschlagung der Späne mit Klebstoff, mit einer Presse gepresst. Dadurch können die Späne bzw. das Grobspanmaterial verdichtet werden. Zweckmäßig ist es dabei, wenn eine mittlere Rohdichte des Grobspanmaterials, insbesondere wie vorgenannt ausgeführt, zwischen 550 kg/m³ und 800 kg/m³, insbesondere 600 kg/m³ bis 700 kg/m³, bevorzugt etwa 620 kg/m³, erreicht wird. Das Pressen erfolgt vorzugsweise bei einer Temperatur von 150 °C bis 300 °C, insbesondere etwa 200°C. Das Pressen wird üblicherweise mit einer Presse, insbesondere einer Heißpresse, umgesetzt. Bewährt hat es sich, wenn das Pressen für eine Pressdauer zwischen 50 Sekunden und 500 Sekunden, insbesondere 100 Sekunden bis 200 Sekunden, bevorzugt etwa 120 Sekunden, durchgeführt wird.

Günstig für einen robusten Verbund ist es, wenn die erste Decklage, insbesondere deren Furnierschicht, das Grobspanmaterial und die zweite Decklage, insbesondere deren Furnierschicht, gemeinsam gepresst werden. Bewährt hat es sich, wenn das Grobspanmaterial bzw. die Späne zur Bildung der Zwischenlage vor dem Pressen zwischen der erste Decklage, insbesondere deren Furnierschicht, und zweiten Decklage, insbesondere deren Furnierschicht, angeordnet werden, wonach die Anordnung von erster Decklage, Grobspanmaterial und zweiter Decklage gepresst wird. Das zwischen den Decklagen angeordnete Grobspanmaterial repräsentiert dabei die Zwischenlage. Das Pressen kann wie, insbesondere vorstehend, beschrieben erfolgen. Dadurch können die erste Decklage, die Zwischenlage und zweite Decklage zu einem robusten Verbund miteinander verbunden, insbesondere verpresst, werden. Vorzugsweise erfolgt das Beaufschlagen der Späne mit Klebstoff vor dem Anordnen des Grobspanmaterials bzw. der Späne zwischen der ersten Decklage und der zweiten Decklage bzw. deren jeweilige Furnierschichten.

Günstig ist es, wenn eine Innenoberfläche der jeweiligen Decklage, welche Innenoberfläche im hergestellten Zustand des Verbundelementes der Zwischenlage, zugewandt ist, vor einem Anordnen des Grobspanmaterials bzw. der Späne zwischen den Decklagen angeschliffen und/oder mit Klebstoff beaufschlagt wird. Auf diese Weise kann ein besonders robuster Verbund zwischen den Decklagen und der Zwischenlage erreicht werden. Der Klebstoff kann wie vorstehend beschrieben ausgebildet sein. Üblicherweise ist die Innenoberfläche mit der oder einer der Furnierschichten der jeweiligen Decklage gebildet. Die Innenoberfläche ist in der Regel im Wesentlichen parallel zur Längserstreckung und Breitenerstreckung der Furnierschicht ausgerichtet, welche Längserstreckung und Breitenerstreckung standardmäßig größer als eine Höhenerstreckung der Furnierschicht sind.

Eine einfache Umsetzung ist erreichbar, wenn die Späne, vorzugsweise nachdem diese mit Klebstoff beaufschlagt wurden, auf der ersten Decklage, insbesondere deren Furnierschicht, üblicherweise schichtförmig, angeordnet werden. Zweckmäßig ist es, wenn die dabei gebildete Schicht von Spänen eine im Wesentlichen gleichmäßige Dicke aufweist. Zweckmäßig kann mit der Schicht von Spänen die Zwischenlage gebildet werden. Insbesondere können die Späne auf die erste Decklage, insbesondere deren Furnierschicht, gestreut werden. Anschließend kann die zweite Decklage, insbesondere deren Furnierschicht, auf den Spänen angeordnet werden, sodass die Späne eine Schicht zwischen den Decklagen bilden. Die von erster Decklage, Grobspanmaterial bzw. Spänen und zweiter Decklage gebildete Anordnung kann anschließend mit der Presse, insbesondere wie vorstehend ausgeführt, gepresst bzw. miteinander verpresst werden. Die Späne können derart auf der ersten Decklage bzw. deren Furnierschicht angeordnet werden, dass die Längsrichtungen der Späne eine Vorzugsrichtung oder keine Vorzugsrichtung aufweisen. Auf diese Weise ist umsetzbar, dass die Späne der Zwischenlage bzw. deren Längsrichtungen eine entsprechenden Vorzugsrichtung aufweisen. Dies kann insbesondere wie vorstehend ausgeführt umgesetzt werden. Üblicherweise wird hierfür eine Streumaschine verwendet, welche ausgebildet ist, die Späne derart ausgerichtet anzuordnen, insbesondere zu streuen.

Zweckmäßig ist es, wenn das Grobspanmaterial bzw. die Späne vor dem Pressen kompaktiert werden. Dadurch können die Späne vorverdichtet werden. Dies erfolgt üblicherweise durch Kraftbeaufschlagung des Grobspanmaterials bzw. der Späne mit einer Druckkraft, welcher kleiner als 50 %, insbesondere kleiner als 20 %, bevorzugt kleiner als 10 %, einer maximalen Presskraft, mit welcher die Späne beim Pressen gepresst werden, ist. Dies kann praktikabel umgesetzt werden, indem die Anordnung von Furnierschicht der ersten Decklage, Furnierschicht der zweiten Decklage sowie zwischen diesen angeordnetem Grobspanmaterial bzw. Spänen durch Kraftbeaufschlagung, üblicherweise in Stapelrichtung, kompaktiert wird. Die Anordnung wird dabei üblicherweise durch die Druckkraft zusammengedrückt.

Vorteilhaft ist es, wenn das Grobspanmaterial bzw. die gepresste Anordnung von Grobspanmaterial und Furnierschicht der ersten Decklage und Furnierschicht der zweiten Decklage nach einer vorgenannten Temperaturbeaufschlagung während des Pressens auf eine Temperatur von weniger als 100 °C, insbesondere weniger als 90 °C, beispielsweise 80 °C, gekühlt wird. Dadurch kann ein Dampfdruck im Material, welcher eine Beschädigung des gepressten Verbundes bewirken kann, reduziert werden. Vorzugsweise erfolgt eine Kühlung auf eine Temperatur zwischen Raumtemperatur und 100 °C, vorzugsweise zwischen 70 °C und 90 °C. Die Kühlung kann mit einer Kühlvorrichtung, beispielsweise unter Wärmeabgabe an ein Kühlmittel, wie eine Kühlflüssigkeit, erfolgen. Die Kühlung kann während des Pressens oder nach dem Pressen erfolgen.

Günstig ist es, wenn, insbesondere nach dem Pressen, die Anordnung von Furnierschicht der ersten Decklage, Zwischenlage und Furnierschicht der zweiten Decklage bzw. das Holzverbundelement bei im Wesentlichen konstanter Temperatur und/oder konstanter Luftfeuchtigkeit für mindestens 1 Woche, vorzugsweise mindestens 2 Wochen, ausgelagert wird. Vorzugsweise erfolgt die Auslagerung mit einer Auslagerdauer von 1 Woche bis 5 Wochen, insbesondere etwa 2 Wochen. Zweckmäßig ist es, wenn das Auslagern bei Raumtemperatur erfolgt.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine schematische Darstellung eines Holzverbundelementes;
Fig. 2 eine Darstellung eines Ablaufes eines Verfahrens zur Herstellung eines Holzverbundelementes;
Fig. 3. eine graphische Darstellung von Messungen eines E-Moduls eines Holzverbundelementes im Vergleich zu einer OSB-Platte;
Fig.4. eine graphische Darstellung von Messungen einer Biegefestigkeit eines Holzverbundelementes im Vergleich zu einer OSB-Platte.

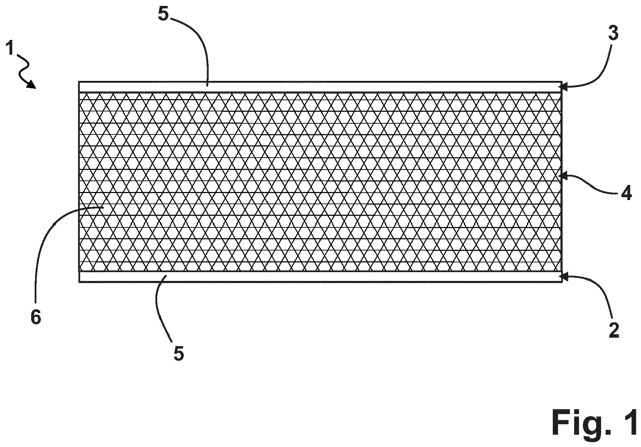

Fig. 1 zeigt eine schematische Darstellung eines Holzverbundelementes 1. Das Holzverbundelement 1 ist mit mehreren Lagen gebildet, wobei zwischen einer ersten Decklage 2, welche mit bzw. aus einer Furnierschicht 5 gebildet ist, und einer zweiten Decklage 3, welche mit bzw. aus einer weiteren Furnierschicht 5 gebildet ist, eine mit Grobspanmaterial 6 gebildete Zwischenlage angeordnet ist. Das Grobspanmaterial 6 ist mit, insbesondere aus, miteinander verklebten Spänen gebildet. Die Furnierschicht 5 der ersten Lage, die Furnierschicht 5 der zweiten Lage und das zwischen den Furnierschichten 5 angeordnete Grobspanmaterial 6 sind üblicherweise mit einer Presse miteinander verpresst.

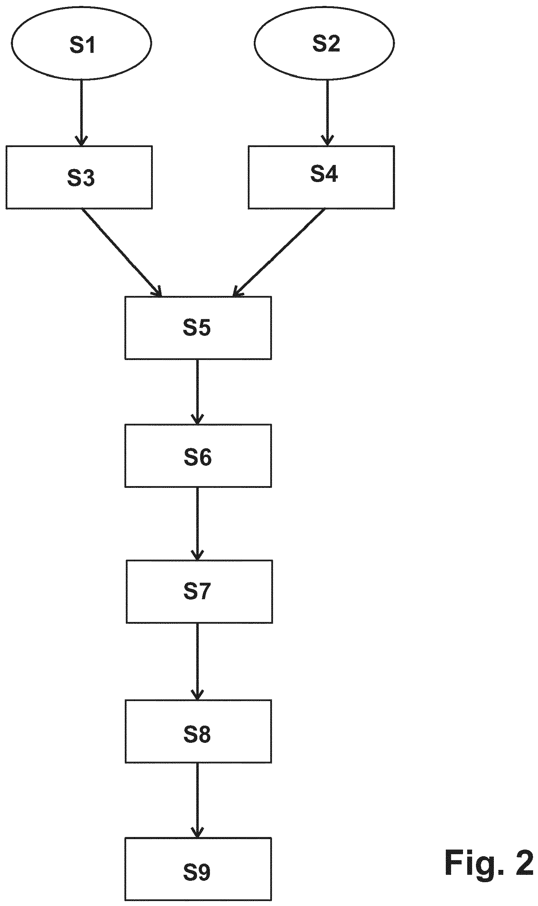

Fig. 2 zeigt eine schematische Darstellung eines Ablaufes eines Verfahrens zur Herstellung eines Holzverbundelementes 1, insbesondere des Holzverbundelementes 1 der Fig.1.

Für das Verfahren zur Herstellung sind Späne von Grobspanmaterial 6 zur Verfügung gestellt, dargestellt in Fig. 2 als S1. Weiter sind für das Verfahren Furnierschichten 5 zur Verfügung gestellt, dargestellt in Fig. 2 als S2. Die Späne können beispielsweise aus Fichtenholz gebildet sein. Die Späne weisen meist eine Holzfeuchtigkeit von 5 % bis 15 %, in der Regel etwa 10 %, auf.

Die Späne werden mit Klebstoff beaufschlagt, wobei vorzugsweise ein Beleimungsgrad von etwa 10 % verwendet wird, dargestellt in Fig. 2 als S3. Der Klebstoff kann ein Leim-Wasser-Gemisch sein. Dies kann praktikabel mit einer Beleimmaschine umgesetzt werden, wobei die Späne in einer Trommel der Beleimmaschine umgewälzt und mit dem Klebstoff beaufschlagt werden.

Je nach erforderlicher Größe der Furnierschichten 5 im Holzverbundelement 1, können mehrere Furnierschichtteilstücke zu einer Furnierschicht 5, insbesondere formschlüssig und/oder kraftschlüssig und/oder stoffschlüssig, verbunden werden. Beispielsweise können mehrere Furnierschichtteilstücke miteinander verklebt werden, um eine Furnierschicht 5 zu bilden. Die Furnierschichten 5 werden dabei üblicherweise in einer Richtung parallel zu einer Ebene, welche durch eine Längsrichtung und eine Breitenrichtung des jeweiligen Furnierschichtteilstückes bzw. der Furnierschicht 5 definiert ist, aneinandergefügt. Die Längsrichtung und Breitenrichtung sind in der Regel orthogonal zueinander. Eine orthogonal zur Längsrichtung und Breitenrichtung ausgerichtete Höhenerstreckung des jeweiligen Furnierschichtteilstückes bzw. der Furnierschicht 5 ist üblicherweise kleiner als deren Längserstreckung in Richtung der Längsrichtung und kleiner als deren Breitenerstreckung in Richtung der Breitenrichtung.

Eine Innenoberfläche der jeweiligen Furnierschicht 5 der ersten Decklage 2 bzw. zweiten Decklage 3 wird mit Klebstoff, insbesondere Leim, beaufschlagt, dargestellt in Fig. 2 als S4. Hierzu können die Furnierschichten 5 bzw. deren Innenoberflächen mit dem Klebstoff bestrichen werden. Die Innenoberfläche stellt üblicherweise jene Oberfläche der Furnierschicht 5 dar, welche im hergestellten Holzverbundelement 1 der Zwischenlage 4 zugewandt, insbesondere an dieser angeordnet, ist. Günstig ist es, wenn die Innenoberfläche vor einer Beaufschlagung mit dem Klebstoff angeschliffen wird, beispielsweise mit einem Schleifpapier.

Die Späne werden auf der Furnierschicht 5, insbesondere der Innenoberfläche der Furnierschicht 5, der ersten Decklage 2 eine Schicht, vorzugsweise mit gleichmäßiger Dicke, bildend angeordnet, dargestellt in Fig. 2 als S5. Mit den Spänen kann damit die Zwischenlage 4 gebildet werden. Praktikabel kann dies durch Bestreuen der Furnierschicht 5 mit den Spänen erfolgen. Üblicherweise wird die Furnierschicht 5 bzw. deren Innenoberfläche im Wesentlichen gänzlich mit Spänen bedeckt. Zweckmäßig kann dies mit einer Aufnahmeform erfolgen, in welcher die Furnierschicht 5 der ersten Decklage 2 formschlüssig anordenbar ist, wobei die Aufnahmeform die Furnierschicht 5 in Höhenrichtung überragt, sodass die Späne unter formschlüssiger Umfassung durch die Aufnahmeform auf der Furnierschicht angeordnet bzw. auf diese gestreut werden können.

Anschließend wird die Furnierschicht 5, insbesondere die Innenfläche der Furnierschicht 5, der zweiten Decklage 3 auf der Schicht von Spänen angeordnet, sodass die Schicht bzw. die Späne zwischen der Furnierschicht 5 der ersten Decklage 2 und der Furnierschicht 5 der zweiten Decklage 3 angeordnet ist, dargestellt in Fig. 2 als S6.

Eine dadurch gebildete Anordnung von zwischen der Furnierschicht 5 der ersten Decklage 2 und Furnierschicht 5 der zweiten Decklage 3 angeordneter Schicht von Spänen wird mit einer Presse gepresst, sodass eine mittlere Rohdichte der Schicht von Spänen bzw. Zwischenlage 4 von 550 kg/m³ bis 800 kg/m³ erreicht wird, dargestellt in Fig. 2 als S7. Dabei wird üblicherweise eine Presskraft in einer Richtung im Wesentlichen parallel zu einer Stapelrichtung, in welcher die Lagen aufeinander angeordnet sind, aufgebracht. Das Pressen kann beispielsweise bei 200 °C für 120 Sekunden durchgeführt werden. Praktikabel ist es, wenn die Anordnung vor dem Pressen kompaktiert bzw. vorverdichtet wird, beispielsweise durch Aneinanderdrücken der ersten Decklage 2 und zweiten Decklage 3 bzw. deren Furnierschichten 5.

Günstig ist es, wenn die Anordnung anschließend, insbesondere während dem Pressen bzw. aufrechterhaltener Presskraft, gekühlt wird, insbesondere auf eine Temperatur von weniger als 100 °C, beispielsweise 80 °C. Dies ist in Fig. 2 als S8 dargestellt. Das Kühlen kann mit einer Kühlvorrichtung der Presse erfolgen.

Zweckmäßig ist es anschließend, wenn die Anordnung bzw. das Holzverbundelement 1 nach dem Pressen bei konstanter Temperatur, beispielsweise Raumtemperatur, und konstanter Luftfeuchtigkeit für mindestens eine Woche, beispielsweise zwei Wochen, gelagert wird. Dies ist in Fig. 2 als S9 dargestellt.

Auf vorgenannte Weise wurden für Vergleichsmessungen Holzverbundelemente 1 hergestellt, welche mit der Presse auf eine mittlere Rohdichte von 620 kg/m3 gepresst wurden. Hierzu wurde die Anordnung von Furnierschichten 5 der Decklagen 2, 3 und zwischen diesen angeordnetem Grobspanmaterial 6 während des Pressens auf einer Temperatur von 200 °C für 120 Sekunden gehalten und anschließend auf eine Temperatur von 80 °C abgekühlt. Anschließend wurden die Holzverbundelemente 1 für zwei Wochen bei Raumtemperatur ausgelagert.

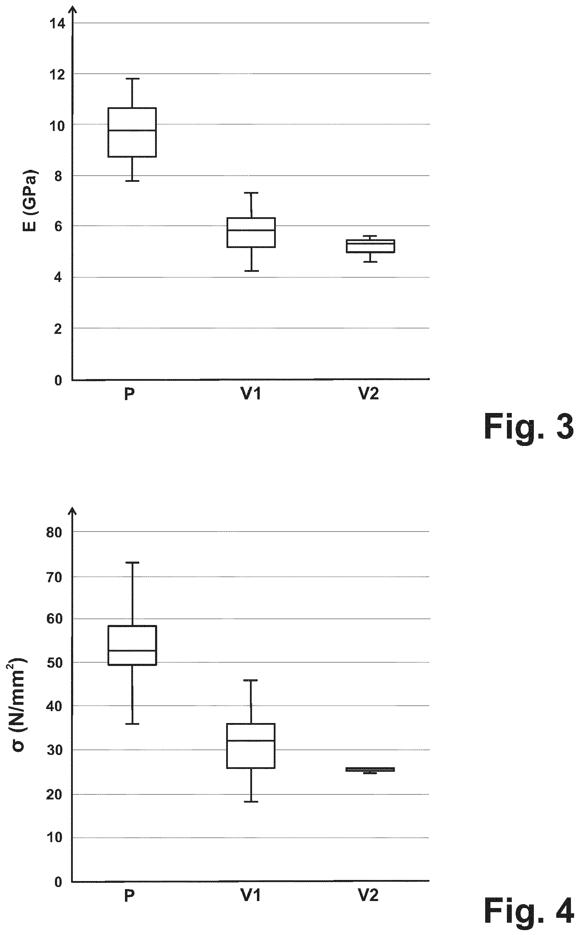

Zur Ausbildung von Messproben P wurden die ausgelagerten Holzverbundelemente 1 gemäß Norm EN 310 in 50 mm breite Streifen geschnitten. Die Messproben P wurden anschließend einer 3-Punkte-Biegeprüfung unterzogen, um einen E-Modul E in GPa und eine Biegefestigkeit σ in N/mm2 der Messproben P zu ermitteln. In analoger Weise wurden Vergleichsproben V1 von selbst hergestellten OSB-Platten erstellt und Vergleichsproben V2 von üblichen industriell hergestellten OSB-Platten zum Vergleich herangezogen und ebenfalls einer 3-Punkte-Biegeprüfung unterzogen. Die selbst hergestellten OSB-Platten entsprechen in ihrem Aufbau der Zwischenlage 4 des Holzverbundelementes 1, repräsentieren also das Holzverbundelement 1 ohne Decklagen 2, 3. Die Messergebnisse sind in Fig. 3 und Fig. 4 dargestellt.

Fig. 3 zeigt das ermittelte E-Modul der Messproben P des Holzverbundelementes 1 sowie zum Vergleich das ermittelte E-Modul der Vergleichsproben V1 der selbst hergestellten OSB-Platten und das ermittelte E-Modul der Vergleichsproben V2 der industriellen OSB-Platten. Das E-Modul ist in Fig. 3 mit E bezeichnet und in GPa angegeben. Fig. 4 zeigt die ermittelte Biegefestigkeit der Messproben P des Holzverbundelementes 1 sowie zum Vergleich die ermittelte Biegefestigkeit der Vergleichsproben V1 der selbst hergestellten OSB-Platten und die ermittelte Biegefestigkeit der Vergleichsproben V2 der industriellen OSB-Platten. Die Biegefestigkeit ist in Fig. 4 mit σ bezeichnet und in N/mm2 angegeben.

Wie in Fig. 3 und Fig. 4 ersichtlich, weisen die Messproben P des Holzverbundelementes 1 sowohl ein höheres E-Modul als auch eine höhere Biegefestigkeit als die Vergleichsproben V1, V2 auf. Die Messproben P weisen ein um 4 GPa höheres E-Modul im Vergleich zu den Vergleichsproben V1 der selbst hergestellten OSB-Platten und den Vergleichsproben V2 der industriellen OSB-Platten auf. So beträgt der Medianwert des E-Moduls für die Messproben P 9,7 GPa, für die Vergleichsproben V1 der selbst hergestellten OSB-Platten 5,72 GPa und für die Vergleichsproben V2 der industriellen OSB-Platten 5,17 GPa, dargestellt in Fig. 3. Der Maximalwert des E-Moduls beträgt für die Messproben P 11,8 GPa, für die Vergleichsproben V1 der selbst hergestellten OSB-Platten 7,32 GPa und für die Vergleichsproben V2 der industriellen OSB-Platten 5,6 GPa. Für die Biegefestigkeit beträgt der Medianwert für die Messproben P 54,13 N/mm², für die Vergleichsproben V1 der selbst hergestellten OSB-Platten 31,56 N/mm² und für die Vergleichsproben V2 der industriellen OSB-Platten 25,56 N/mm², dargestellt in Fig. 4. Dabei ist ein Maximalwert der Biegefestigkeit für die Messproben P von 72,8 N/mm², für die Vergleichsproben V1 der selbst hergestellten OSB-Platten von 46 N/mm² und für die Vergleichsproben V2 der industriellen OSB-Platten von 26 N/mm² erhalten.

Wenn das Holzverbundelement 1 mit bzw. aus Furnierschichten 5 gebildeten Decklagen 2, 3, zwischen welchen eine Zwischenlage 4 aus Grobspanmaterial 6 angeordnet ist, ausgebildet ist, kann eine optimierter Biegefestigkeit bei vorzugsweise wenig Aufwand erreicht werden.

## Patentansprüche

1. Holzverbundelement (1), gebildet mit mehreren aufeinander angeordneten Lagen, wobei eine Zwischenlage (4) zwischen einer ersten Decklage (2) und einer zweiten Decklage (3) angeordnet ist, **dadurch gekennzeichnet, dass** die erste Decklage (2) und die zweite Decklage (3) jeweils mit einer Furnierschicht (5) gebildet ist und die Zwischenlage (4) mit Grobspanmaterial (6) gebildet ist.

2. Holzverbundelement (1) nach Anspruch 1, **dadurch gekennzeichnet, dass** die erste Decklage (2) und/oder zweite Decklage (3) jeweils mit mehreren, vorzugsweise miteinander verklebten Furnierschichten, gebildet ist, welche insbesondere in Form von Furnierschichtholz oder Furniersperrholz angeordnet sind.

3. Holzverbundelement (1) nach Anspruch 1 oder 2, **dadurch gekennzeichnet, dass** das Grobspanmaterial (6) der Zwischenlage (4) mit miteinander verklebten und/oder verpressten Spänen gebildet ist.

4. Holzverbundelement (1) nach einem der Ansprüche 1 bis 3, **dadurch gekennzeichnet, dass** Grobspanmaterial (6) der Zwischenlage (4) eine mittlere Rohdichte zwischen 550 kg/m³ und 800 kg/m³, insbesondere 600 kg/m³ bis 700 kg/m³, aufweist.

5. Holzverbundelement (1) nach einem der Ansprüche 1 bis 4, **dadurch gekennzeichnet, dass** Späne des Grobspanmaterials (6) eine durchschnittliche Länge von 100 mm bis 200 mm, eine durchschnittliche Breite von 10 mm bis 50 mm und/oder eine durchschnittliche Dicke von 0,6 mm bis 1,5 mm aufweisen.

6. Holzverbundelement (1) nach einem der Ansprüche 1 bis 5, **dadurch gekennzeichnet, dass** die zumindest eine Furnierschicht (5) eine Dicke zwischen 0,5 mm und 8 mm, insbesondere zwischen 1 mm und 3 mm, aufweist.

7. Holzverbundelement (1) nach einem der Ansprüche 1 bis 6, **dadurch gekennzeichnet, dass** die zumindest eine Furnierschicht (5) aus Fichtenholz oder Buchenholz gebildet ist.

8. Verfahren zur Herstellung eines Holzverbundelementes (1), insbesondere eines Holzverbundelementes (1) nach einem der Ansprüche 1 bis 7, welches Holzverbundelement (1) mit mehreren aufeinander angeordneten Lagen gebildet wird, wobei eine Zwischenlage (4) zwischen einer ersten Decklage (2) und einer zweiten Decklage (3) angeordnet wird, **dadurch gekennzeichnet, dass** die erste Decklage (2) und die zweite Decklage (3) jeweils mit einer Furnierschicht (5) gebildet wird und die Zwischenlage (4) mit Grobspanmaterial (6) gebildet wird.

9. Verfahren nach Anspruch 8, **dadurch gekennzeichnet, dass** Späne des Grobspanmaterials (6) mit Klebstoff beaufschlagt werden, bevor das Grobspanmaterial (6) zwischen der ersten Decklage (2) und zweiten Decklage (3) angeordnet wird.

10. Verfahren nach Anspruch 8 oder 9, **dadurch gekennzeichnet, dass** das Grobspanmaterial (6) gepresst wird, vorzugsweise bei einer Temperatur von mindestens 150 °C.
